# EUROPEAN PATENT SPECIFICATION

(11) **EP 3 415 011 B1**
(45) Date of publication and mention of the grant of the patent: **08.04.2020**
(21) Application number: 18177305.2
(22) Date of filing: 12.06.2018
(51) Int. Cl.: A21D 13/45, A21B 5/02, A21D 13/36, A21C 15/04

(54) **PROCEDURE FOR THE PRODUCTION OF WAFER HALF-SHELLS**
VERFAHREN ZUR HERSTELLUNG VON WAFER-HALBSCHALEN
PROCÉDURE DE PRODUCTION DE DEMI-COQUES EN GAUFRETTE

(30) Priority: 14.06.2017 LU 100316
(43) Date of publication of application: 19.12.2018
(73) Proprietor: Soremartec S.A., 2633 Senningerberg (LU)
(72) Inventor: MASSA, Luciano, I-12042 BRA (Cuneo) (IT); NEGRO, Mathia, I-14100 ASTI (IT)
(74) Representative: Rambelli, Paolo

(56) References cited:
- EP-A1- 0 878 130
- EP-A1- 0 968 653
- EP-A1- 1 433 384
- EP-A1- 1 967 069
- EP-A2- 0 054 229
- EP-A2- 0 221 033
- WO-A1-97/48282
- US-A1- 2008 032 012

## Description

The present invention relates to an industrial process for the production of wafer half-shells formed by a pair of the aforementioned half-shells fitted together mouth-to-mouth and including a filling.

In particular, the invention relates to a method wherein said half-shells are obtained by separation from a wafer sheet having a plurality of half-shells connected to each other by an interconnecting wall, which in turn is connected to each half-shell through an annular region surrounding the half-shell having a thickness smaller than the thickness of the interconnecting wall.

A wafer sheet having the aforementioned characteristics may be obtained, for example, by the process described in WO2011/067733, which is intended to be incorporated herein by reference.

The process described therein uses, for the production of the wafer sheet, a mold comprising a female half-mold and a male half-mold defining jointly a molding cavity for the wafer; the female half-mold comprises a plurality of cells of a shape corresponding to the half-shells to be produced, the front face of which, turned toward the male half-mold, has annular formations projecting towards the front surface of the male half-mold and surrounding each cell, which define in the batter subjected to baking in the molding cavity a notch in the interconnecting wall adjacent to each half-shell.

The wafer sheet resulting from this method has a plurality of half-shells connected to the interconnecting wall by an annular bridge of reduced thickness with respect to the thickness of the interconnecting wall.

As described in WO2011/067733, the half-shells may be separated from the wafer sheet resulting from baking by means of a pressure in the direction orthogonal to the plane of the interconnecting wall; to this end, the solidified wafer sheet may be extracted from the mold and placed on a support having cavities which supports the half-shells or the interconnecting wall, separating the half-shells by means of pressure exerted on the half-shells or respectively on the interconnecting wall.

The half-shells obtained by this method have a finished surface, substantially over their entire wall, as well as on their annular mouth surface (i.e. on the annular surface connecting the inner surface to the outer surface of the half-shell retaining wall), and therefore the baking is done with the batter in contact with the polished surfaces of the two half-molds.

The term 'finished surface' means a smooth surface, similar to a skin, substantially free from macropores; the term 'finished' being used to distinguish the morphological characteristics of this surface with respect to those of a surface resulting from cutting a wafer wall which, owing to the wafer's porous inner structure, has a macroporous and/or crumbled surface with open cells.

Obtaining half-shells with a finished rim surface is particularly desirable in the production of filled hollow products including a fluid filling, since the presence of matching surfaces with finished rims limits the risk of fluid leakage. Furthermore, the completion of the half-shell with a finished rim is advantageous in the welding process of half-shells by humidifying the matching rims, described in EP-A-1 647 190. It is therefore necessary that the separation operation of the half-shells from the interconnecting wall does not interfere or deteriorate the surface finish of the annular orifice rim of the half-shells.

WO 97/48282 describes a method for manufacturing wafer half-shells from a wafer sheet comprising a plurality of half-shells connected to each other by an interconnecting wall, wherein, in order to facilitate demoulding of said wafer sheet, the wall of the half-shells has a thickness lower than the thickness of the interconnecting wall. The cutting operation is performed by means of a saw having a serrated profile in a plane parallel to the plane of the interconnecting wall.

US 2008/032012 describes the production of wafer products wherein wafer half-shells are cut out from a wafer sheet by means of stamping tools which can be moved up and down in a direction orthogonal to the wafer sheet.

EP 1 967 069 describes a wafer having a plane core part and an array of hollowed formations projecting for a given height with respect to the core part and also having further array of formations set between the hollowed formations and projecting from the core part for a height smaller than the height of the hollowed formations. The cutting operation for obtaining the half-shells corresponding to the hollowed formations is performed in a plane parallel to the plane of the core part. EP 1 433 384 A1 describes a method for the preparation of a wafer half-shell with a mouth and a containing side wall, characterized in that it comprises the steps of: preparing a wafer comprising a plurality of the half-shells connected by at least one interconnecting wall connected to the half-shells in a receded position relative to the annular mouth surface of the half-shells, and separating the individual half-shells from the interconnecting wall by cutting in a direction perpendicular to the general plane of the interconnecting wall.

Although the shape features of a wafer sheet, as described in WO2011/067733, are suitable to facilitate the separation of the half-shells from the interconnecting wall in the transfer onto the industrial-scale of the half-shell production process, wherein it is necessary to use wafer sheets of large dimensions with a high number of half-shells, it has been found that the separation operation, whether performed by compression or cutting, involves significant problems that cause the production of a large number of defective half-shells, for example having a crumbled or jagged mouth contour, resulting in a high loss of productivity.

The object of the present invention is to provide a method that overcomes the aforementioned disadvantages and is thus particularly suitable for being implemented in industrial production by substantially limiting the production of waste and increasing productivity.

In view of such aim, the object of the invention is a method as defined in the following claims, which form an integral part of the present description.

Further advantages and features of the method according to the invention will become apparent from the detailed description that follows, provided with reference to the accompanying drawings, provided by way of non-limiting example, wherein:
- figure 1 is a schematic illustration of steps a)-e) of the method starting with step a) wherein the wafer sheet is placed on a support to then be subjected to the punching operation through step e) wherein a half-shell is separated from the wafer;
- figure 2 is a schematic representation of the steps b), c), d) and e) of figure 1 showing the cross-sectional views of the corresponding representations in figure 1;
- figure 3 is a schematic representation of a detail of the punching operation;
- figure 4 is a sectional view of a part of the punching apparatus used in the scope of figure 1 and figure 2;
- figures 5 and 6 show two cutting edges of a cutting die, and
- figure 7 is a sectional view of the ejector members cooperating with the cutting dies in the cutting operation.

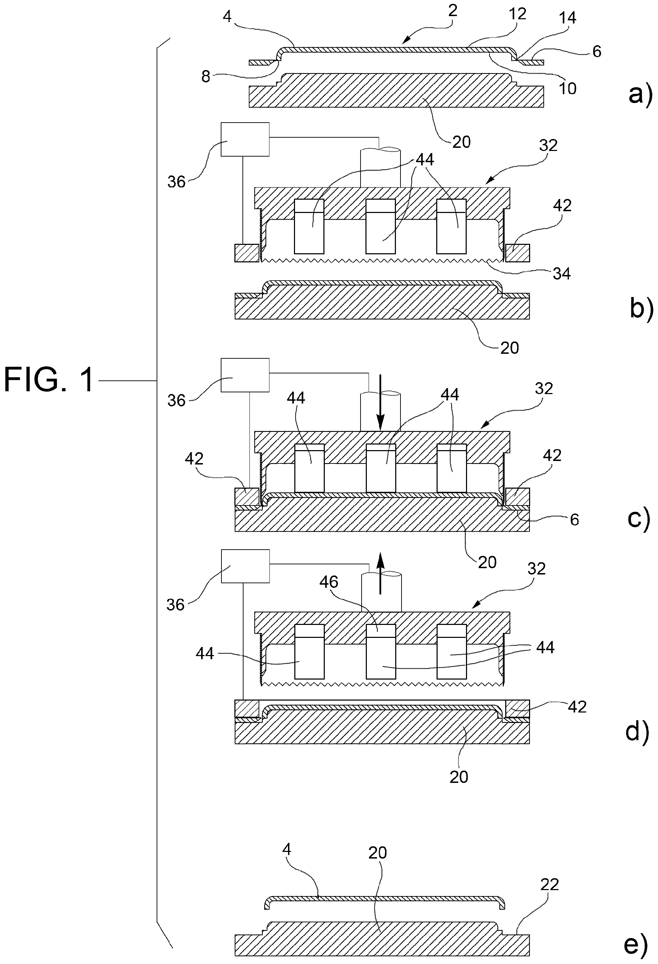

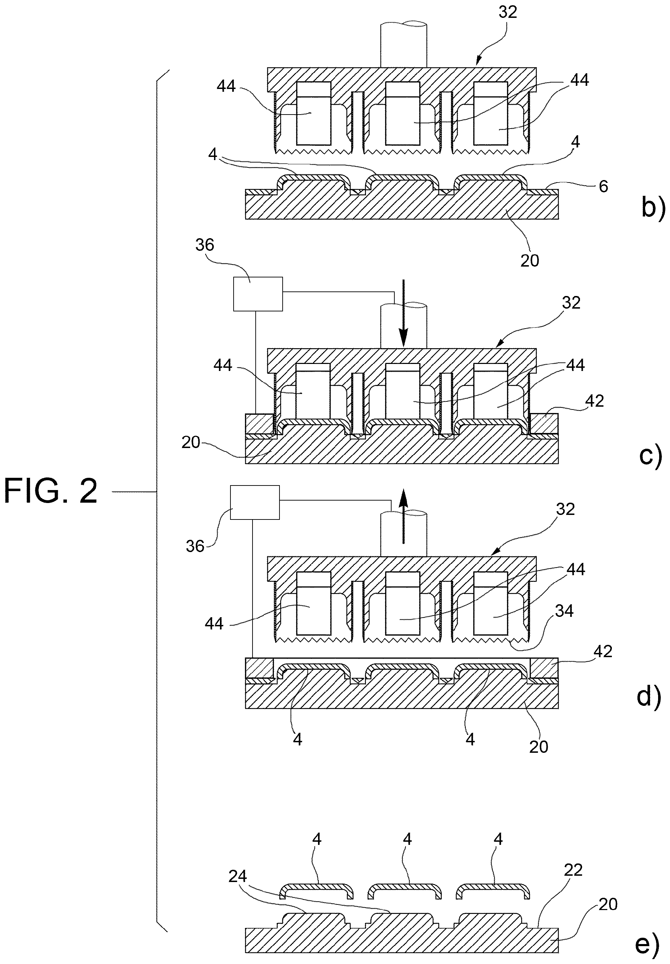

With reference to the drawings, at 2 is indicated a wafer sheet that comprises a plurality of half-shells 4 connected together by an interconnecting wall 6. Although figures 1 and 2 illustrate a single row of half-shells, in industrial production, the wafer will comprise a plurality of half-shells 4 arranged in a matrix, i.e., according to a plurality of rows, generally parallel to each other, and columns parallel to each other and orthogonal to the rows.

The shape of the half-shells is not binding and may be chosen according to the shape of the product that is to be made.

The half-shells 4 have an annular mouth surface 8 which constitutes the connecting surface between the inner surface 10 and the outer surface 12 of the concave wall defining the half-shell; such mouth surface is a finished rim surface since the wafer is obtained by baking in a mold having surfaces in contact with such surface.

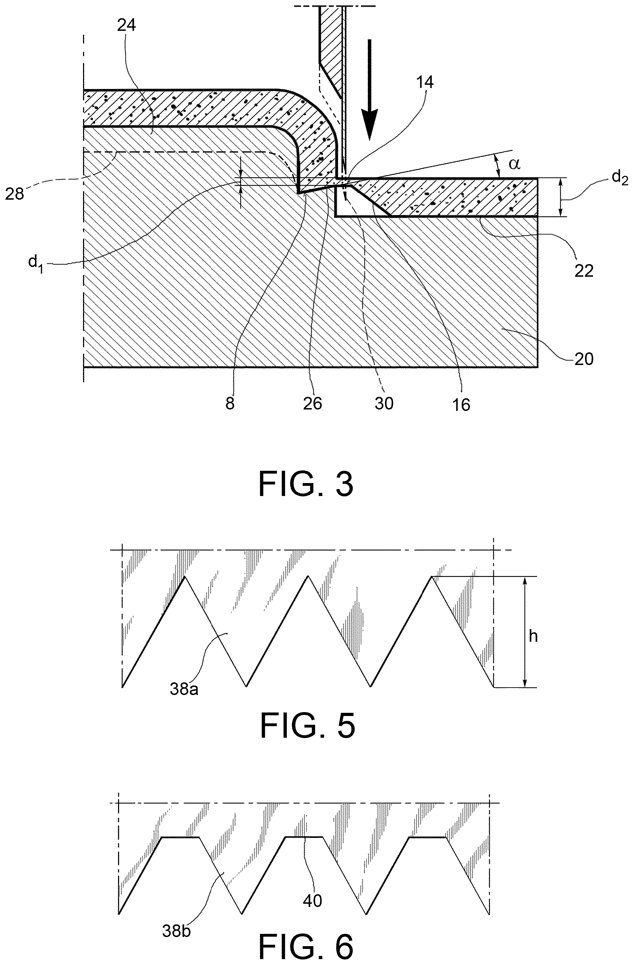

The half-shells are connected to the interconnecting wall 6 by means of an annular region or bridge 14 which preferably has a thickness d1 reduced with respect to the thickness d2 of the interconnecting wall (see detail in figure 3). In a typical product of this type, d1 is on the order of 0.1 - 0.8 mm and d2 is on the order of 1 to 3 mm. Preferably, the interconnecting wall 6, adjacent to the aforementioned annular bridge, has a chamfer 16.

As indicated in the cross section detail of figure 3, referred to a preferred embodiment, the annular mouth surface 8 is inclined with respect to the general plane of the interconnecting wall, forming with this an angle α preferably approximately 5-15°.

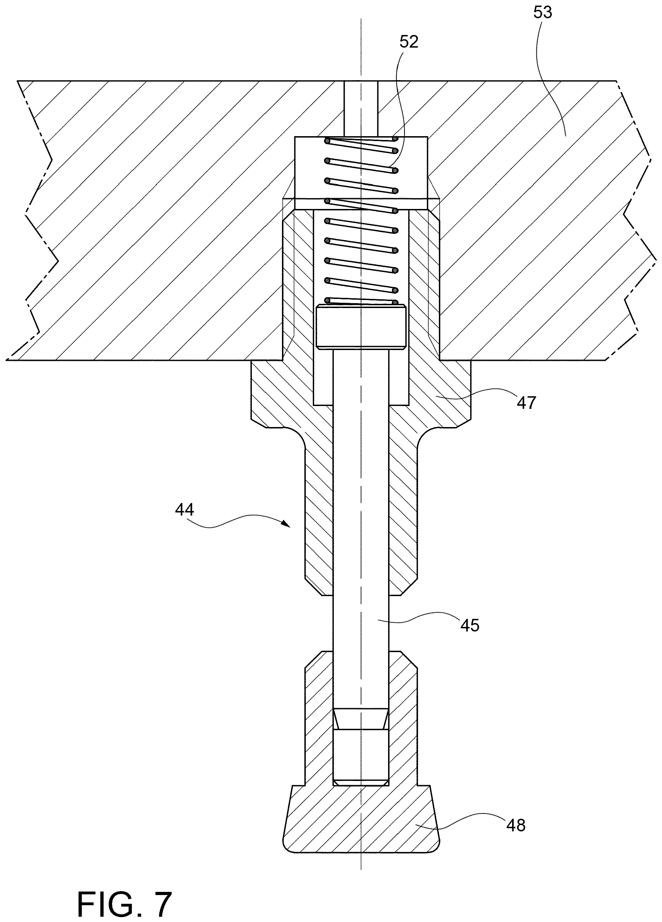

The solution wherein the two half-shells used to produce a closed hollow body have annular mouth surfaces, both inclined (with respect to the junction plane of the two half-shells) with the same inclination, is illustrated in figures 7 and 8 of EP 1 433 386 and is therein described as useful for improving the centering of the two half-shells. However, within the scope of the present invention, such a solution is desirable and advantageous as an additional feature for obtaining a clean cut of the annular region 14 without causing a deterioration of the finished surfaces of the annular mouth rim.

To carry out the separation operation of the half-shells 4 from the wafer sheet 2, the wafer is initially positioned on a support consisting of a supporting plate 20 with at least its interconnecting wall 6 in contact with a complementary surface 22 of said support plate.

The support plate 20 according to the invention is made of a plastic material, preferably polycarbonate.

The support plate 20 is generally a plate other than that wherein the wafer sheet 2 is shaped and baked, as the baking plates in the oven are mostly cast iron plates which are not suitable to support cutting actions. Plate 20 is therefore, preferably, an ad hoc produced support plate whereon the wafer sheet is transferred following its solidification.

In a preferred embodiment, the support plate 20 has a plurality of protruding formations 24 with a shape corresponding to the shape of the half-shells and is furthermore shaped so as to provide a support surface 26 (fig. 3) for the annular mouth surface 8 of each half-shell, as well as a surface 22 supporting the interconnecting wall 6. However, it is possible to perform the separation operation also with the use of a plate wherein the protruding formations 24 are lowered (for example, by 1 - 2 tenths of a millimeter) compared to the inner surface 10 of the half-shells; for example, this lowered surface is indicated by the dotted line 28 in figure 3.

In another embodiment, however, it is possible to carry out the separation operation also by positioning the wafer sheet with the cavities of the half-shells facing upwards, that is, towards the cutting member, i.e. using a support plate with cavities having concavity facing upwards and with the interconnecting wall 6 supported by a support surface complementary to it as previously indicated.

According to the preferred embodiment shown in figure 3, wherein the cavities of the half-shells are facing downward and supported by the formations 24, it is preferable that the annular bridge region 14, where the cutting operation described below is carried out, is not directly supported by the surface of the support plate, thus leaving an empty space 30 underneath the annular region.

The half-shell separation operation is carried out with the use of a plurality of cutting dies or punches 32, each having a cutting profile corresponding to the contour of the half-shell at the aforementioned annular region 14 with reduced thickness.

In practice, in an industrial system, support plates 20 with a respective wafer sheet 2 associated with them are conveyed, e.g. by means of a stepwise movable conveyor, to a temporary stopping position wherein the cutting edge of the cutting dies 32 is in perfect register with the contour of the half-shells as indicated above; alternatively, it is possible to perform the separation operation continuously, i.e. with tracking, so that the cutting dies are movable with a feed rate corresponding to the feed rate of the conveyor which transports the support plates.

In step b) of figures 1 and 2, the cutting dies 32 are positioned above the support plate 20 with their cutting edges 34 in perfect register with the annular region 14; a centering precision on the order of 1-4 tenths of a millimeter is preferable. The cutting-dies 32 are vertically movable and are simultaneously actuated by a motor 36 which drives the translation between the raised position of figures 1b) and 2b) and the lowered position of figures 1c) and 2c) wherein the cutting profile 34 of the cutting dies has notched the annular region 14, stopping adjacent and preferably avoiding contact with the surface 22 of the support plate.

In the scope of the invention, it has been found that, in order to avoid or reduce the production of defective half-shells, the impact of the cutting profile with the annular region 14 and therefore the initial cutting thereof must be made by spaced points or dashes. For this reason, a serrated cutting profile 34 is adopted, preferably with triangular teeth 38a, 38b (figures 5 and 6). It is preferable to have a cutting profile wherein consecutive teeth are joined at an acute angle, as shown in figure 5; however, other profiles such as those shown in figure 6 may be considered wherein consecutive teeth are connected by a rectilinear section 40. Preferably, the height h of each tooth is greater than the thickness of the interconnecting wall indicated at d1 in fig. 3.

In combination with a serrated cutting profile, the adoption of an annular mouth rim 8 of the half-shells inclined with respect to the plane of the interconnecting wall, as previously described, further improves the precision of the cut, presumably as it avoids the propagation of the rupture of said annular mouth surface avoiding its deterioration.

The cutting dies and, in particular, their cutting profiles, are generally made of steel, e.g. tool steel.

To optimize the cutting operation, it is preferable that, during its execution, the interconnecting wall 6 of the wafer is bound to the support plate. To this end, the cutting die is preferably associated to a retaining member comprising a stop plate 42, vertically movable, between a raised position and a lowered position for holding the interconnecting wall 6 blocked and thereby in contact with the surface of the support plate. The pressure exerted by the stop plate 42 on the wafer sheet may be adjusted by elastic means, such as helical springs 31.

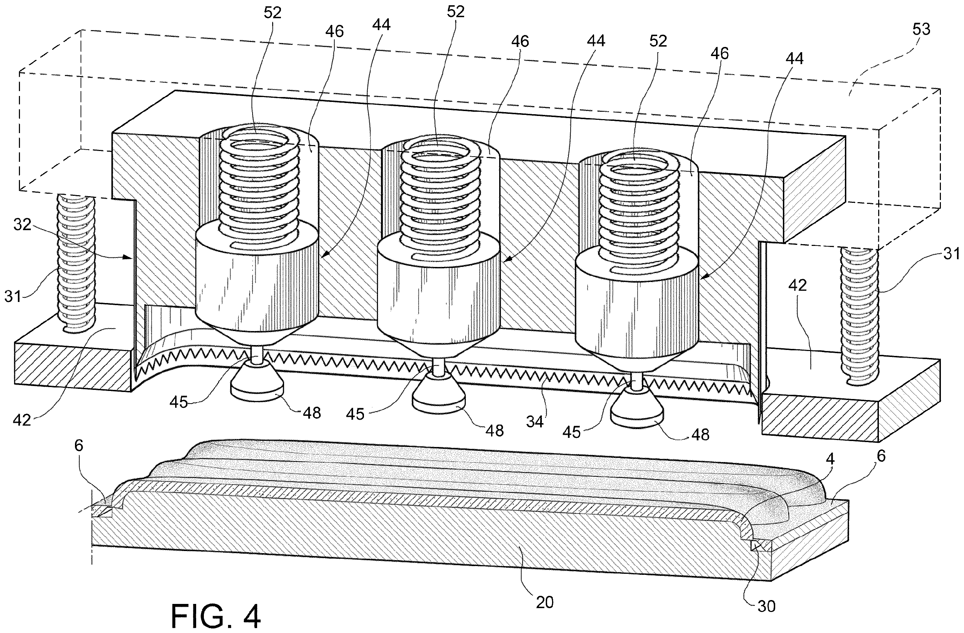

The stop plate 42 may have a plurality of openings wherein a respective cutting die 32 or a row of cutting dies is movable and is driven, in its vertical motion, by the same motor 36 that controls the vertical translation of the cutting dies, compensating for the extra travel of the springs 31 (Fig. 4). To carry out the cutting operation, the motor 36 causes the advancement of the stop plate 42 from the raised position (figures 1b) and 2b)) to the lowered position (figures 1c) and 2c)) wherein the stop plate 42 binds the interconnecting wall 6 to the support plate. This operation may take place simultaneously with the advancement of the cutting dies 32 towards the support plate 20, however before the cutting dies engage the annular region 14. In conjunction with the retaining action exerted on the wafer sheet by the plate 42, ejector members 44, driven by the motor 36 and compensated, in the descending motion, by springs 52, cooperate with the plate 42 to retain the wafer 4 on the support 20.

As illustrated in figures 4 and 7, one or more movable ejector members 44 is associated with each cutting die, which has the function of preventing the punched half-shell from being held within the respective cutting die 32 during the subsequent movement of the cutting dies away from the support plate. Such ejector members may for example comprise a piston 45 movable within a respective opening 46 made in the body of the cutting die.

Figure 4 is a schematic representation of a cutting die used in the scope of the method, and provides a sectional perspective view that allows the internal structure to be viewed. In figure 4, parts corresponding to the parts illustrated in figures 1 through 3 have the same reference numerals. In particular, in this figure are illustrated the aforementioned ejector members 44, vertically movable in the cylindrical openings 46, and having an end part 48, preferably of elastomeric material such as silicone, adapted to exert pressure on the half-shell 4 following its cutting to prevent its possible engagement within the cutting profile in the ascending motion of the cutting die.

A constructive detail of the ejector members is illustrated in the technical drawing of figure 7, wherein elements corresponding to elements of figure 4 are indicated with the same reference numerals, although illustrated with a different conformation.

As illustrated, the ejector members 44 comprise a terminal part 48 of elastomeric material, fixed to a sliding, rod-shaped piston 45.

The ejector members 44 are fixed to a vertically movable plate 53, to which the cutting dies 32 are also anchored by means of a threaded rod guide element 47.

An elastic member 52, in the form of a helical spring, exerts pressure on the rod 45 with a defined preload, making sure that the rod exerts on the wafer sheet a force such that it maintains the wafer sheet in position before and after cutting.

Once the cutting operation is performed, the motor 36 drives the vertical movement of the cutting dies away from the support plate 20 and simultaneously or subsequently the vertical movement of the stop plate 42 and that of the ejectors 44, to disengage the interconnecting wall 6 (figures 1d and 2d) and the plurality of half-shells 4 (figures 4), as mentioned above.

The process according to the invention, due to its innovative features, provides a substantial increase in productivity, in particular avoiding deterioration or crumbling of the annular rim surface of the half-shells obtained.

## Claims

1. Method for producing wafer half-shells (4) comprising the operations of:
- providing a wafer sheet (2) comprising a plurality of half-shells (4) connected to each other by an interconnecting wall (6), where the said interconnecting wall is connected to each half-shell by means of an annular region (14) surrounding the half-shell having a thickness smaller than the thickness of the interconnecting wall, and
- separating the half-shells from the interconnecting wall (6) along a cutting profile corresponding to the half-shell contour at said smaller thickness annular region (14), by means of a cutting operation performed in the direction orthogonal to the plane of the interconnecting wall, **characterized in that** in said separation operation the interconnecting wall (6) is supported by a support (20) made of plastic material, and said separation operation is carried out by means of a cutting member (32) having a serrated cutting profile (34).

2. Method according to claim 1, **characterized in that** in said wafer sheet (2), said half-shells (4) have an annular mouth surface (8) inclined with respect to the general plane of said interconnecting wall (6).

3. Method according to claim 2, **characterized in that** said annular mouth surface (8) forms an angle from 5° to 15° with respect to the general plane of said interconnecting wall.

4. Method according to any of claims 2 or 3, **characterized in that** said support (20) made of plastic material is shaped to support the lower surface of said interconnecting wall (6) and said annular mouth surface (8).

5. Method according to claim 4, **characterized in that** said support (20) comprises a plurality of protruding formations (24) each of a shape complementary to the shape of a respective half-shell (4), said half-shells being positioned on the support with their cavity facing the support.

6. Method according to any of the claims 1 through 5, **characterized in that** said support is made of polycarbonate.

7. Method according to any of the preceding claims, **characterized in that** said interconnecting wall (6) is held in contact with the support (20) by means of a retaining member (42) prior to and during the separation operation.

8. Method according to claim 7, **characterized in that** said cutting member (32) is a cutting die movable between a raised position and a cutting position under the action of a motor device (36), the cutting die being associated with a plate-shaped retaining member (42) which binds the interconnecting wall (6) to the support (20) by keeping it in contact with this before and during the cutting operation.

9. Method according to claims 7 and 8, **characterized in that** one or more ejector members (44) are associated with each cutting die, which are adapted to keep the cut half-shells (4) in contact with the support following the separation and cutting operation.

10. Method according to claim 9, **characterized in that** said one or more ejector members (44) are vertically movable in a corresponding opening in the body of the cutting die.

11. Method according to any one of the preceding claims, **characterized in that** said serrated profile (34) has triangular-shaped teeth (38a, 38b).

12. Method according to claim 11, **characterized in that** said triangular-shaped teeth (38a, 38b) have a height (h) greater than the thickness (d1) of the interconnecting wall (6).

13. Method according to any of the preceding claims wherein in said wafer sheet (2), said half-shells (4) have an annular mouth surface (8) with a smooth surface finish.

## Patentansprüche

1. Verfahren zur Herstellung von Wafer-Halbschalen (4) mit folgenden Schritten:
- Bereitstellen einer Waferplatte (2) mit einer Vielzahl von durch eine Verbindungswand (6) miteinander verbundenen Halbschalen (4), wobei die Verbindungswand mit jeder Halbschale mittels eines ringförmigen Bereichs (14) verbunden ist, der die Halbschale umgibt und eine Dicke aufweist, die geringer als die Dicke der Verbindungswand ist,
- Trennen der Halbschalen von der Verbindungswand (6) entlang eines Schneidprofils, das der Halbschalenkontur an dem ringförmigen Bereich (14) mit geringerer Dicke entspricht, mittels eines Trennvorgangs, der in der Richtung senkrecht zur Ebene der Verbindungswand durchgeführt wird, **dadurch gekennzeichnet, dass** bei dem Trennvorgang die Verbindungswand (6) von einem Träger (20) aus Kunststoffmaterial getragen wird, und der Trennvorgang mittels eines Trennelements (32) mit einem gezackten Schneidprofil (34) erfolgt.

2. Verfahren nach Anspruch 1, **dadurch gekennzeichnet, dass** in der Waferplatte (2) die Halbschalen (4) eine ringförmige Mündungsfläche (8) aufweisen, die in Bezug auf die allgemeine Ebene der Verbindungswand (6) geneigt ist.

3. Verfahren nach Anspruch 2, **dadurch gekennzeichnet, dass** die ringförmige Mündungsfläche (8) einen Winkel von 5° bis 15° in Bezug auf die allgemeine Ebene der Verbindungswand bildet.

4. Verfahren nach einem der Ansprüche 2 oder 3, **dadurch gekennzeichnet, dass** der aus Kunststoff hergestellte Träger (20) geformt ist, um die untere Oberfläche der Verbindungswand (6) und die ringförmige Mündungsfläche (8) zu tragen.

5. Verfahren nach Anspruch 4, **dadurch gekennzeichnet, dass** der Träger (20) eine Vielzahl von vorstehenden Ausformungen (24) aufweist, mit jeweils einer Form, die komplementär zu der Form einer jeweiligen Halbschale (4) ist, wobei die Halbschalen mit ihrem Hohlraum dem Träger zugewandt an dem Träger positioniert sind.

6. Verfahren nach einem der Ansprüche 1 bis 5, **dadurch gekennzeichnet, dass** der Träger aus Polycarbonat hergestellt ist.

7. Verfahren nach einem der vorhergehenden Ansprüche, **dadurch gekennzeichnet, dass** die Verbindungswand (6) mittels eines Halteelements (42) in Kontakt mit dem Träger (20) vor und während des Trennvorgangs gehalten wird.

8. Verfahren nach Anspruch 7, **dadurch gekennzeichnet, dass** das Trennelement (32) ein Stanzwerkzeug ist, das unter der Wirkung einer Motorvorrichtung (36) zwischen einer angehobenen Position und einer Schneidposition bewegbar ist, wobei dem Stanzwerkzeug ein plattenförmiges Halteelement (42) zugeordnet ist, welche die Verbindungswand (6) mit dem Träger (20) verbindet, indem dieses diese in Kontakt damit vor und während des Trennvorgangs hält.

9. Verfahren nach den Ansprüchen 7 und 8, **dadurch gekennzeichnet, dass** ein oder mehrere Ejektorelemente (44) jedem Stanzwerkzeug zugeordnet sind, die dazu eingerichtet sind, die geschnittenen Halbschalen (4) in Kontakt mit dem Träger nach dem Separier- und Trennvorgang zu halten.

10. Verfahren nach Anspruch 9, **dadurch gekennzeichnet, dass** das eine oder die mehreren Ejektirelemente (44) in einer entsprechenden Öffnung im Körper des Stanzwerkzeugs vertikal bewegbar sind.

11. Verfahren nach einem der vorhergehenden Ansprüche, **dadurch gekennzeichnet, dass** das gezackte Schneidprofil (34) dreieckförmige Zähne (38a, 38b) aufweist.

12. Verfahren nach Anspruch 11, **dadurch gekennzeichnet, dass** die dreieckförmigen Zähne (38a, 38b) eine Höhe (h) aufweisen, die größer als die Dicke (d1) der Verbindungswand (6) ist.

13. Verfahren nach einem der vorhergehenden Ansprüche, bei dem in der Waferplatte (2) die Halbschalen (4) eine ringförmige Mündungsfläche (8) mit einer glatten Oberflächenbeschaffenheit aufweisen.

## Revendications

1. Procédé de production de demi-coques de gaufrette (4) comprenant les opérations de :
- fourniture d'une feuille de gaufrette (2) comprenant une pluralité de demi-coques (4) raccordées les unes aux autres par une paroi de raccordement mutuel (6), où ladite paroi de raccordement mutuel est raccordée à chaque demi-coque au moyen d'une région annulaire (14) entourant la demi-coque ayant une épaisseur plus petite que l'épaisseur de la paroi de raccordement mutuel, et
- séparation des demi-coques de la paroi de raccordement mutuel (6) le long d'un profil de coupe correspondant au contour de la demi-coque au niveau de ladite région annulaire d'épaisseur plus petite (14), au moyen d'une opération de coupe réalisée dans la direction orthogonale au plan de la paroi de raccordement mutuel, **caractérisé en ce que** dans ladite opération de séparation la paroi de raccordement mutuel (6) est supportée par un support (20) fait de matière plastique, et ladite opération de séparation est réalisée au moyen d'un organe de coupe (32) ayant un profil de coupe dentelé (34).

2. Procédé selon la revendication 1, **caractérisé en ce que** dans ladite feuille de gaufrette (2), lesdites demi-coques (4) ont une surface d'embouchure annulaire (8) inclinée vis-à-vis du plan général de ladite paroi de raccordement mutuel (6).

3. Procédé selon la revendication 2, **caractérisé en ce que** ladite surface d'embouchure annulaire (8) forme un angle de 5° à 15° vis-à-vis du plan général de ladite paroi de raccordement mutuel.

4. Procédé selon l'une quelconque des revendications 2 ou 3, **caractérisé en ce que** ledit support (20) fait de matière plastique est mis en forme pour supporter la surface inférieure de ladite paroi de raccordement mutuel (6) et ladite surface d'embouchure annulaire (8).

5. Procédé selon la revendication 4, **caractérisé en ce que** ledit support (20) comprend une pluralité de formations en saillie (24) ayant chacune une forme complémentaire à la forme d'une demi-coque (4) respective, lesdites demi-coques étant positionnées sur le support avec leur cavité face au support.

6. Procédé selon l'une quelconque des revendications 1 à 5, **caractérisé en ce que** ledit support est fait de polycarbonate.

7. Procédé selon l'une quelconque des revendications précédentes, **caractérisé en ce que** ladite paroi de raccordement mutuel (6) est maintenue en contact avec le support (20) au moyen d'un organe de retenue (42) avant et pendant l'opération de séparation.

8. Procédé selon la revendication 7, **caractérisé en ce que** ledit organe de coupe (32) est une matrice de coupe mobile entre une position relevée et une position de coupe sous l'action d'un dispositif de moteur (36), la matrice de coupe étant associée à un organe de retenue en forme de plaque (42) qui relie la paroi de raccordement mutuel (6) au support (20) en la maintenant en contact avec celui-ci avant et pendant l'opération de coupe.

9. Procédé selon les revendications 7 et 8, **caractérisé en ce qu'**un ou plusieurs organes éjecteurs (44) sont associés à chaque matrice de coupe, qui sont adaptés pour maintenir les demi-coques (4) coupées en contact avec le support à la suite de l'opération de séparation et de coupe.

10. Procédé selon la revendication 9, **caractérisé en ce que** lesdits un ou plusieurs organes éjecteurs (44) sont mobiles verticalement dans une ouverture correspondante dans le corps de la matrice de coupe.

11. Procédé selon l'une quelconque des revendications précédentes, **caractérisé en ce que** ledit profil dentelé (34) a des dents de forme triangulaire (38a, 38b).

12. Procédé selon la revendication 11, **caractérisé en ce que** lesdites dents de forme triangulaire (38a, 38b) ont une hauteur (h) plus grande que l'épaisseur (d1) de la paroi de raccordement mutuel (6).

13. Procédé selon l'une quelconque des revendications précédentes, dans lequel dans ladite feuille de gaufrette (2), lesdites demi-coques (4) ont une surface d'embouchure annulaire (8) avec un fini de surface lisse.
